# EUROPÄISCHE PATENTANMELDUNG

(11) **EP 1 445 586 A1**
(43) Veröffentlichungstag der Anmeldung: **11.08.2004**
(21) Anmeldenummer: 04100282.5
(22) Anmeldetag: 28.01.2004
(51) Int. Cl.: G01D 13/04, G12B 11/00

(54) **Analoges Anzeigeinstrument**

(30) Priorität: 03.02.2003 DE 10304283
(71) Anmelder: SIEMENS AKTIENGESELLSCHAFT, 80333 München (DE)
(72) Erfinder: Kolar, Anton, 78052, Villingen-Schwenningen (DE)

(57) **Zusammenfassung**

Die Erfindung betrifft ein analoges Anzeigeinstrument (1) mit einem Anzeigesymbole (4, 5, 6) aufweisenden Anzeigefeld (2), wobei das Anzeigefeld (2) dreidimensional ausgebildet ist und die Anzeigesymbole (4, 5, 6) einstückig mit dem Anzeigefeld (2) hergestellt sind. Das Anzeigefeld (2) und/oder ein Anzeigesymbol (4, 5, 6) des Anzeigfeldes (2) weisen auf der dem Betrachter abgewandten Seite des Anzeigefeldes (2) Lichtleiter auf, welche die Anzeigesymbole (4, 5, 6) des Anzeigefeldes (2) beleuchten.

## Beschreibung

Die vorliegende Erfindung betrifft ein analoges Anzeigeinstrument mit einem Anzeigesymbole aufweisenden Anzeigefeld.

In Kraftfahrzeugen sind üblicherweise in einem Armaturenbrett verschiedenste Anzeigeinstrumente integriert, die einem Fahrer vielfältige Informationen, wie beispielsweise Geschwindigkeit des Fahrzeugs, Drehzahl des Motors oder Tankfüllgrad anzeigen. Insbesondere analoge Anzeigeinstrumente weisen auf Anzeigefeldern angebrachte Ziffern- oder Symbolblätter auf, die die zu einer Identifikation erforderlichen Anzeigesymbole tragen. In der Regel sind die Ziffernblätter eigenständige Bauteile, die mittels Befestigungselementen auf den Anzeigefeldern montiert oder direkt oberhalb einer Leiterplatte angeordnet sind. Die Ziffernblätter weisen Skalenstriche und/oder weitere Symbole auf, die nicht lichtdicht bedruckt sind, so daß emittierendes Licht einer hinter der vom Betrachter abgewandten Seite des Ziffernblattes angeordneten Lichtquelle das Ziffernblatt hinterleuchtet und die Skalenstriche und weiteren Symbole für den Fahrer sichtbar werden.

Aufgrund der zweidimensionalen Ausbildung herkömmlicher Ziffernblätter und der Anordnung in einem das Ziffernblatt aufnehmende Gehäuseteil eines Anzeigeinstrumentes ist die Ausgestaltung der Anzeigeinstrumente im wesentlichen zweidimensional ausgelegt. Desweiteren erfordern herkömmliche Anzeigeinstrumente ein das Anzeigefeld abdeckendes, transparentes Schutzglas. Aufgrund der bisherigen Ausgestaltung der Anzeigeinstrumente können ungünstige äußere Lichtverhältnisse die Erkennbarkeit des Anzeigefeldes beeinträchtigen. Aufwendige Blendschutzvorrichtungen müssen zusätzlich eingesetzt werden, um einfallendes Licht ausreichend abzuschirmen. Weiterhin sind hohe Herstellungskosten aufgrund einer großen Anzahl an Bauteilen und erhöhtem Montageaufwand nachteilig.

Aufgabe der vorliegenden Erfindung ist es, ein Anzeigeinstrument vorzusehen, welches eine freie geometrische Formgebung erlaubt, kostengünstig herstellbar ist und eine hochwertige Anzeige der Anzeigesymbole erlaubt.

Die Aufgabe wird erfindungsgemäß dadurch gelöst, daß das Anzeigefeld dreidimensional ausgebildet ist und die Anzeigesymbole einstückig mit dem Anzeigefeld hergestellt sind.

Die dreidimensionale Ausgestaltung des Anzeigefeldes hat den Vorteil, daß in Abhängigkeit der Anforderung an das Anzeigefeld beispielsweise eine Ausgestaltung vorgenommen werden kann, die einem Fahrer eine gute Sichtbarkeit der Anzeigesymbole auch bei ungünstigen äußeren Lichtverhältnissen erlaubt.

Weiterhin erweist es sich als vorteilhaft, das Anzeigefeld einstückig mit den Anzeigesymbolen herzustellen, da der Einbau eines separaten Ziffernblattes nicht mehr notwendig ist und somit die zur Befestigung des Ziffernblattes notwendigen Bauteile eingespart werden können. Der Montageaufwand wird reduziert, insbesondere auch dadurch, daß das Anzeigefeld oder Bereiche der Anzeigesymbole auf der dem Betrachter abgewandten Seite des Anzeigefeldes röhrenartige Ausbildungen aufweisen, die als Lichtleiter dienen und welche einstückig mit dem Anzeigefeld ausgebildet sind. Diese Lichtleiter sind von einem lichtundurchlässigen Kunststoff umgeben, der ein Überleuchten des im Lichtleiter geführten Lichts in benachbarte Lichtleiter verhindert.

Um die Integreation beweglicher Anzeigeelemente, wie beispielsweise Scheibenzeiger, in das Anzeigefeld zu ermöglichen, ist im Anzeigefeld mittig eine transparente Abdeckung angeordnet. In vorteilhafter Weise wird diese Abdeckung in einem Herstellungsschritt mit dem Anzeigefeld und den Anzeigesymbolen als Zwei-Komponenten Spritzteil hergestellt.

Ein auf dem Anzeigefeld aufgebrachter Schwarzdruck, ein sog. Black-Panel-Druck, weist eine reduzierte Transmission auf und bewirkt, daß das Anzeigefeld in inaktivem Zustand, d.h. im unbeleuchteten Zustand, als eine annähernd schwarze Fläche erscheint. Somit wird das Anzeigefeld lediglich beim Einschalten der Beleuchtung sichtbar.

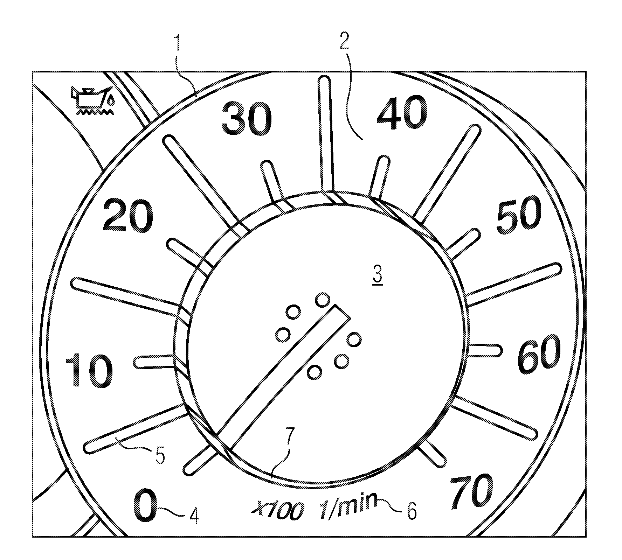

Ein Ausführungsbeispiel der Erfindung wird anhand der nachfolgenden Figur 1 näher erläutert.

Figur 1 eine perspektivische Darstellung der Vorderansicht des erfindungsgemäßen Anzeigeinstrumentes.

In der Figur 1 ist die perspektivische Vorderansicht eines Anzeigeinstrumentes 1 dargestellt. Das Anzeigeinstrument 1 weist ein Anzeigefeld 2 mit im Anzeigefeld 2 angeordneten Ziffern 4, Skalenstrichen 5 und Symbolen 6 auf. Anzeigeinstrumente 1 sind üblicherweise in Kraftfahrzeugen vorzufinden und sind im Sichtbereich des Fahrers angeordnet. Das Anzeigefeld 2 ist mit den Anzeigesymbolen 4, 5, 6 einstückig ausgebildet und weist eine dreidimensionale Ausgestaltung auf. Im Anzeigefeld 2 ist mittig eine Abdeckung 3 angeordnet, hinter der sich ein bewegliches Anzeigeelement 7, beispielsweise ein Scheibenzeiger, befindet. Das Anzeigefeld 2, die Anzeigesymbole 4, 5, 6 und die Abdeckung 3 sind als Zwei-Komponenten Spritzteil hergestellt, wobei die Anzeigesymbole 4, 5, 6 und die Abdeckung 3 aus transparentem Kunststoff oder PMMA (Polymethylmetacrylat) hergestellt sind und somit von hinter dem Anzeigefeld 2 auf einer nicht sichtbaren Leiterplatte angeordneten Lichtquellen beleuchtet werden können.

Das Anzeigefeld 2 und/oder Bereiche der Anzeigesymbole 4, 5, 6 weisen auf einer hier nicht gezeigten Rückseite des Anzeigefeldes 2 eine Ausbildung auf. Diese Ausbildung ist auf der vom Betrachter abgewandten Seite des Anzeigefeldes 2 ausgebildet und wirkt als Lichtleiter, indem Licht eines emittierenden Elementes, welches auf der Leiterplatte angeordnet ist, eingekoppelt wird. Die Lichtleiter übernehmen hierbei die Funktion der Lichtführung des von der auf der Leiterplatte angeordneten Lichtquelle emittierten Lichts, das am Ende des Lichtleiters, in diesem Ausführungsbeispiel an den vorgesehenen Anzeigesymbolen 4, 5, 6 ausgekoppelt wird. Die Lichtleiter bestehen aus transparenten Materialien wie Epoxidharz oder Polymethylmetacrylat (PMMA). Damit ein Überleuchten bei der Führung des Lichts durch benachbarte Lichtleiter verhindert wird, sind die Lichtleiter außen mit einer lichtundurchlässigen Schicht versehen. Das Anzeigefeld 2 ist mit einem Black-Panel Druck versehen, der ein Durchleuchten der Anzeigesymbole 4, 5, 6 in unbeleuchtetem Zustand verhindert.

Das vorgeschlagene Anzeigefeld 2 ist in der Herstellung wesentlich vereinfacht. Die Bauteilreduzierung führt zu einer deutlichen Kostenreduzierung. Der Montageaufwand beim Einsatz des Anzeigefeldes 2 in ein Kombiinstrument für ein Kraftfahrzeug wird wesentlich verringert.

## Patentansprüche

1. Analoges Anzeigeinstrument (1) mit einem Anzeigesymbole (4, 5, 6) aufweisenden Anzeigefeld (2) ,
**dadurch gekennzeichnet, daß**
das Anzeigefeld (2) dreidimensional ausgebildet ist und die Anzeigesymbole (4, 5, 6) einstückig mit dem Anzeigefeld (2) hergestellt sind.

2. Anzeigeinstrument (1) nach Anspruch 1,
**dadurch gekennzeichnet, daß**
das Anzeigefeld (2) und/oder ein Anzeigesymbol (4, 5, 6) des Anzeigfeldes (2) auf der dem Betrachter abgewandten Seite eine longitudinal angeordnete Ausbildung aufweist.

3. Anzeigeinstrument (1) nach Anspruch 2,
**dadurch gekennzeichnet, daß**
die longitudinal angeordnete Ausbildung ein Lichtleiter ist, der eine auf einer Leiterplatte angeordnete Lichtquelle umschließt.

4. Anzeigeinstrument (1) nach Anspruch 1,
**dadurch gekennzeichnet, daß**
die Anzeigesymbole (4, 5, 6) Ziffern (4), Skalenstriche(5) und Symbole (6) umfassen.

5. Anzeigeinstrument (1) nach Anspruch 1,
**dadurch gekennzeichnet, daß**
das Anzeigefeld (2) eine mittig positionierte, transparente Abdeckung (3) zum Schutz beweglicher Anzeigeelemente (7) aufweist.

6. Anzeigeinstrument (1) nach Anspruch 1,
**dadurch gekennzeichnet, daß**
das Anzeigefeld (2), die Anzeigesymbole (4, 5, 6) und die transparente Abdeckung (3) als Zwei-Komponenten Spritzteil hergestellt sind.

7. Anzeigeinstrument (1) nach Anspruch 1,
**dadurch gekennzeichnet, daß**
das Anzeigefeld (2) auf der dem Betrachter zugewandten Seite mit einem Black-Panel Druck versehen ist.

8. Anzeigeinstrument (1) nach Anspruch 6,
**dadurch gekennzeichnet, daß**
die transparente Abdeckung (3) und die Anzeigesymbole (4, 5, 6) aus Epoxidharz und/oder Polymethylmetacrylat (PMMA) hergestellt sind.

9. Anzeigeinstrument (1) nach Anspruch 1,
**dadurch gekennzeichnet, daß**
das Anzeigefeld (2) aus einem lichtundurchlässigen Kunststoff hergestellt ist.
